# EUROPEAN PATENT APPLICATION

(11) **EP 4 411 083 A1**
(43) Date of publication of application: **07.08.2024**
(21) Application number: 24154864.3
(22) Date of filing: 30.01.2024
(51) Int. Cl.: E04B 1/00, F24F 13/02

(54) **SYSTEM FOR A BALCONY ARRANGEMENT AND A BUILDING USING SUCH SYSTEM**

(30) Priority: 31.01.2023 SE 2350090
(71) Applicant: Balco Group AB, 352 45 Växjö (SE)
(72) Inventor: Andreasson, Pär, 352 45 Växjö (SE)
(74) Representative: AWA Sweden AB

(57) **Abstract**

The disclosure relates to a system (100,) for a balcony arrangement (10) on a building (20), the system comprising, a first wall structure (110, 210, 310), a second wall structure (120, 220, 320), at least one of the first and second wall structures being part of a balcony arrangement, and at least one pipe channel (130, 230, 330) configured to guide a plurality of fluid pipes (30) from at least one central outdoor heat exchanger (40) to one or more local indoor heat exchanger units to be arranged inside a room of the building, wherein the at least one pipe channel is configured to extend along a longitudinal interface between to the first wall structure and the second wall structure. The disclosure further relates to the use of such system.

## Description

### Technical field

The present invention relates to a system for a balcony arrangement on a building and the use of such system.

### Background

A heat pump uses the outside air as a heat source or heat sink. In the winter, the heat pump works by absorbing heat from the air outside the building by using an external heat exchanger and transferring it to the air inside the building to heat the same by using an internal heat exchanger. In the summer it works in reverse, i.e., absorbing the heat from the inside of the building and transferring it to the outside of the building to cool the same. The heat pump works on the principle of compression and expansion of a refrigerant, which absorbs and releases heat as it changes state.

In, for example, an apartment building with balconies it is unwanted to mount the external heat exchanger inside the balcony as it is not space efficient. Some solutions are that the external heat exchanger is mounted on the outside of balcony, or on the exterior wall of the building. However, this affects the aesthetics of the building and may therefore be restricted by the owner of the building or by law. Therefore, as a measure, the external heat exchanger may be located at ground level.

To transfer the refrigerant between the external heat exchanger and the internal heat exchanger, pipes are connected between the heat exchangers and installed on the exterior wall of the house. This is not as salient as the external heat exchanger but still affects the aesthetics of the building. Another problem is that the exterior wall needs to be punctured to install the pipes and any supporting brackets. This may affect the weatherproofing and structural strength of the exterior wall. Water from rain may penetrate the holes and expand when freezing and thereby damage the exterior wall. To puncture the exterior wall may also affect the energy efficiency of the building.

Therefore, there is a need of a more energy efficient and weatherproof installation of the pipes.

### Summary

It is an object of the present disclosure to provide a system for a balcony arrangement on a building that addresses at least some of the problems mentioned in the technical background, namely that the system should provide a more aesthetic appealing building. Another object is to provide a system that causes less damage to the exterior wall of the building and thereby does not affect the weatherproofing and strength of the exterior wall. Yet another object is to provide a system that facilitates the installation of the pipes that are required to interconnect an external heat exchanger with one or more internal heat exchangers.

Still another object is to provide a solution that is applicable to multistorey buildings with several apartments, where several apartments share a common central outdoor heat exchanger which in turn serve two or more apartments or rooms with one or more local indoor heat exchanger units per apartment or room.

These and other objects are met by a system for a balcony arrangement on a building, wherein the balcony arrangement comprises a plurality of balconies, the system comprising, a first wall structure, a second wall structure, at least one of the first and second wall structures being part of a balcony arrangement, and at least one pipe channel configured to guide a plurality of fluid pipes from one central outdoor heat exchanger to a plurality of local indoor heat exchanger units to be arranged inside different rooms of the building, wherein the at least one pipe channel is configured to extend along a longitudinal interface formed between the first wall structure and the second wall structure.

The pipe channel may be formed by a pipe duct, i.e., by a structural element.

It may be advantageous to hide the pipe channel or pipe duct between a first wall structure and a second wall structure, wherein at least one of these forms part of the balcony arrangement as it provides a hidden type of pipe channel that will be difficult to spot from the outside. In other words, the pipe channel or pipe duct may be integrated with the balcony arrangement. Therefore, the aesthetics of the building may be enhanced as there will be no visual pipes that are installed along the exterior wall of the building. Furthermore, as the pipe channel or pipe duct is installed in connection to the balcony arrangement, there may not be any need to install the pipes at the exterior wall of the building. Thus, there will not be any damage made to the exterior wall of the building. The exterior wall will thereby be kept intact and thereby the weatherproof outer layer will function as intended. Also, the energy efficiency may be less affected since less holes are made.

As yet another advantage, the installation will not have any impact on the balconies as such which typically are provided as modular units to be installed to the building.

It may also be advantageous with a pipe channel or pipe duct between the central outdoor heat exchanger and the local indoor heat exchanger units as it may facilitate the installation process of the fluid pipes. As the installer does not need to install the fluid pipes to the exterior wall, the need for special tools for providing holes in the exterior wall may not be required. To prepare holes for fastening the fluid pipes to the exterior wall are time consuming and by providing the pipe channel or pipe duct it may result in a more time efficient installation. The fluid pipes are used for transporting a refrigerant of the heat pump. The pipe channel or pipe duct may be used for other types of pipes and cables as well. As non-limiting examples, the pipe channel or pipe duct may be used for electricity cables, network cables, drainage pipes and/or broadband cables. The pipe channel or pipe duct extends along the longitudinal interface but may have a respective branch for each local indoor heat exchanger unit, that branches off to connect the local indoor heat exchanger unit with the pipe channel or pipe duct. This may for example be achieved through T-connections.

When the pipe channel or pipe duct extends along the longitudinal interface between the first wall structure and the second wall structure, the pipe channel or pipe duct may be protected from consciously and unconsciously external damage. The pipes will generally be less exposed.

The fluid pipes may be connected to the local indoor heat exchanger unit through the exterior wall both at the balcony space as well as through any other part of the exterior wall. The position of the local indoor heat exchanger unit is typically adapted to the overall layout of the rooms of the building/apartment to allow a good air circulation. This has an impact to the connection and extension of the fluid pipes.

It may be advantageous with a common central outdoor heat exchanger that connects with two or more local indoor heat exchanger units in different rooms or apartments at either the same floor level or at different floor levels. This allows fewer outdoor heat exchangers to be used, and the impact on the aesthetic appearance of the building is lower. Combining the central outdoor heat exchanger with a balcony arrangement comprising a plurality of balconies also allows for hiding the central outdoor heat exchanger under a balcony at the lowest level. The central outdoor heat exchanger may be built in under the balcony arrangement. When the central outdoor heat exchanger is located at the bottom of the building, maintenance is facilitated.

The balcony arrangement may be a glazed balcony arrangement.

The plurality of balconies forming the balcony arrangement may be arranged in columns and/or rows. The balconies may as a non-limiting example be balconies for a respective room of the building where the rooms are located above each other such that a column of balconies form the balcony arrangement. The rooms may be in a single apartment or be part of different apartments. The balcony arrangement may also, in another example, comprise two balconies arranged next to each other with a wall between said two balconies.

Each balcony comprises walls that are formed by wall structures. The term wall structures should therefore be understood as the visual structures that together build one wall of the balcony. As an example one wall may comprise pillars at each side of a glazed wall and in that case each pillar and the glazed wall are a respective wall structure, and all of the wall structures together represent the wall.

At least one of the first wall structure and the second wall structure may extend between two or more floor levels of the building; and the local indoor heat exchanger units may be arranged inside rooms and apartments at different floor levels.

By providing two or more local indoor heat exchanger units at different floor levels or in different apartments at one and the same floor level, a more efficient installation of the pipes may be performed. Furthermore, a more efficient use of resources may be achieved when fewer central outdoor heat exchangers are used. One common central outdoor heat exchanger may be used to serve several rooms or apartments.

With one of the wall structures extending between two or more floor levels is herein meant that the same wall structure of each balcony is connected to each other such that the pipe duct is allowed to follow the same type of wall structure in each balcony and that this common wall structure of the balconies may be seen as the wall structure of the balcony arrangement.

As an example, it may be an apartment building with several floors with balconies at every floor. In such case, the pipe channel or pipe duct may extend from the bottom where the common central outdoor heat exchanger is located and up to the top floor, supplying a local indoor heat exchanger unit at each floor level. It also allows for supplying more than one local indoor heat exchanger unit at the same floor, i.e., in different rooms or in different apartments

In some embodiments, the first wall structure may be an exterior wall of the building, or a wall pillar configured to be mounted to the exterior wall of the building and configured to allow a direct or indirect suspension of the balcony arrangement. The second wall structure may be a side pillar of the balcony arrangement, and the at least one pipe channel may be formed by a pipe duct configured to extend along a longitudinal interface between the exterior wall of the building and the side pillar or between the wall pillar and the side pillar.

It may be advantageous that the first wall structure is either the exterior wall of the building or a wall pillar that allows the balcony arrangement to be suspended. This allows the pipe duct to be located close to the exterior wall. As the pipes will be connected to the local indoor heat exchanger unit, which is arranged inside the building, it may facilitate the installation if it can be easily connected. By positioning the pipe duct close to the exterior wall of the building it may result in a low impact on the design of the balcony. The side pillar may be a part of the glazed wall of the balcony arrangement. Therefore, the only change of design is that the glazing will start slightly further away from the exterior wall of the building. The distance between the side pillar and the exterior wall will be affected by the number of pipe ducts that are installed and their width.

In some embodiments, the first wall structure and the second wall structure may form part of the balcony arrangement; and the at least one pipe channel may be formed by a pipe duct configured to extend along a longitudinal interface between the first wall structure and the second wall structure.

It may be advantageous that both the first wall structure and the second wall structure form part of the balcony arrangement as it allows the pipe duct to be mounted in other positions of the balcony arrangement. This provides a flexibility for the constructor which may be useful in situations where the pipe duct is preferred to be fully integrated in the balcony arrangement. Furthermore, it may be advantageous as it allows for preparing the system in a balcony module that is pre-assembled at a remote site and then transported to the building site where it is mounted to the building.

The pipe duct may form a corner of the balcony arrangement between the first wall structure and the second wall structure.

In other words, an example of a position for the pipe duct may be in a corner between one of the side walls of the balcony arrangement and a front wall of the balcony arrangement. It may be advantageous with a corner position as it may not affect the glazed area of a glazed balcony arrangement.

The at least one pipe duct may be two or more pipe ducts configured to be arranged at least partly in parallel to each other when extending between the central outdoor heat exchanger and a respective local indoor heat exchanger unit.

It may be advantageous with two or more parallel pipe ducts as it allows the fluid pipes for each local indoor heat exchanger unit to be connected directly with one pipe duct. Thus, each pipe duct would be connected to a respective local indoor heat exchanger unit.

The at least one pipe duct may be modular and form a plurality of pipe duct sections.

It may be advantageous that each pipe duct is modular as it facilitates the transportation to the building site. With pipe duct sections, the length of the full pipe duct may not be a problem. The pipe duct may be modular such that the length can be adapted by adding more pipe duct sections, one after the other.

At least one of the wall pillar and the side pillar may be a modular section, thereby allowing a plurality of wall pillar sections and side pillar sections respectively to be interconnected side by side into a total length required to meet the height of the building and hence the number of floor levels of the building.

The system may further comprise at least one branch pipe duct configured to be arranged between two consecutive pipe duct sections or at the end of one pipe duct section.

In for example embodiments where each pipe duct may provide more than one local indoor heat exchanger unit with fluid pipes, it may be advantageous to have a branch pipe duct to allow branching of the pipe duct. This may be advantageous when the pipe duct is used for a combination of fluid pipes and cables as it provides extra flexibility to the installation. It may also facilitate the connection to the local indoor heat exchanger unit as it allows the pipe duct to be branched which may be advantageous when the connection is not adjacent to the balcony.

The at least one pipe duct may have an extruded profile having a closed cross-sectional profile defining one common channel or defining two or more separate channels.

It may be advantageous that the at least one pipe duct have a closed cross-sectional profile as it will protect the fluid pipes from external damage. In embodiments where the cross-sectional profile defines two or more separate channels, the fluid pipes may be protected from cascade damage from each other as well. If by way of example one fluid pipe should break, the area of the damage will be more local.

The extruded profile may have an inspection side that may be opened. Which may be advantageous during maintenance and inspection of the fluid pipes. The inspection side may be provided with an openable wall portion.

The at least one pipe duct is an extruded profile having an open cross-sectional profile.

It may be advantageous with an open cross-sectional profile as it allows the fluid pipes to be reached along the full pipe duct. This may facilitate both installation and maintenance. Furthermore, it may further increase the construction flexibility of the system as the pipes may be connected to the pipe duct at, the by the installer or designer, desired locations.

The extruded profile may be any one of the following group of profiles, a U-profile, C-profile, E-profile, H-profile, Z-profile, T-profile, and L-profile. These are all examples of what, in the context of the application, should be understood as open cross-sectional profiles. The open cross-sectional profile may be provided with an openable wall portion attached thereto that forms an inspection side.

The extruded profile may be designed such that the fluid duct is provided with a fastening surface to which the fluid pipe(s) may be fastened with cable ties or other suitable mean.

The at least one pipe duct may comprise two opposite exterior side walls, each having a flat surface extension.

The flat surface extension allows a facilitated fastening towards the first wall structure and the second wall structure.

The at least one pipe duct may also be designed to allow that the pipe ducts are parallel fastened into each other.

The system may further comprise at least one cover plate configured to be arranged along an exterior surface formed by at least one of, and preferably of at least two of the first wall structure, the second wall structure and the at least one pipe channel.

It may be advantageous with a cover plate as it provides a smooth surface that can be adapted to fit well with the rest of the balcony. The cover plate covers the fluid pipes which further enhances the aesthetics of the building. There may be one cover plate at each side of the balcony arrangement such that the system is covered both from a view from the inside of the balcony as well as from a view outside the balcony.

The at least one pipe duct comprises a plurality of fasteners configured to secure the plurality of fluid pipes to the at least one pipe duct.

The plurality of fasteners allows the fluid pipes to be secured towards the pipe duct in which they are installed. It may also facilitate the installation of the fluid pipes as the length of the fluid pipes may cause them to be challenging to install.

The fasteners may be prepared in the pipe duct as snap-fit fasteners that allows the fluid pipes to be snapped into the fasteners. Alternatively, different types of clamps may be used. In other embodiments the pipe duct may have a profile that allows the fasteners to be connected in the profile.

The first wall structure and the second wall structure may be configured to form a common wall between a first and a second balcony section; and wherein the system further comprises a third wall structure, said third wall structure being a front wall of the balcony arrangement.

The common wall may be a common fire wall.

The location between a common firewall of the first and second balcony section results in a shorter installation distance to both of the balconies. It may also be reached from both of the balconies. The balcony sections are common in apartment buildings where two or more apartments are adjacent to each other. To separate the balconies, walls are installed between. The walls may both be used as a fire wall and/or for privacy.

The at least one of the first wall structure, the second wall structure and the third wall structure may be a glazed wall of the balcony arrangement.

One of the first wall structure and the second wall structure may further comprise a drainage system, and the pipe channel may be configured to guide a drainage pipe from the local indoor heat exchanger unit to the drainage system.

The drainage system allows to guide the drainage pipe directly to the drainage system instead of having a separate pipe that guide drainage moisture away from the building, thereby providing a more efficient installation. This also allows for a more space-efficient use of the pipe channel. Furthermore, the drainage system may be a part of the balcony arrangement which provides synergy effects when the drainage system for the balcony and the drainage system for the local indoor heat exchanger unit are able to co-operate.

According to a second aspect of the present disclosure the system of the first aspect may be used on a building with at least one balcony arrangement.

The system and its advantages have been thoroughly discussed above. These are equally applicable for the use of such system on a building with at least one balcony arrangement.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

### Brief description of the drawings

The invention will now be described in more detail with reference to the accompanying drawings.
- Fig. 1: is an overview exemplifying three different positions for the different embodiments of the system.
- Fig. 2A: is a side view of a first embodiment of the system in a first position.
- Fig. 2B: is a perspective view of the first embodiment of the system.
- Fig. 2C: is an illustration of the connection of the pipe duct to a local indoor heat exchanger unit.
- Fig. 2D: is a perspective view of a second embodiment of the system in the first position.
- Fig. 3: is a perspective view of a third embodiment of the system in a second position.
- Fig. 4A: is a perspective view of a fourth embodiment of the system in a third position.
- Fig. 4B: is an illustration of the fourth embodiment of the system as extending between balcony sections.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

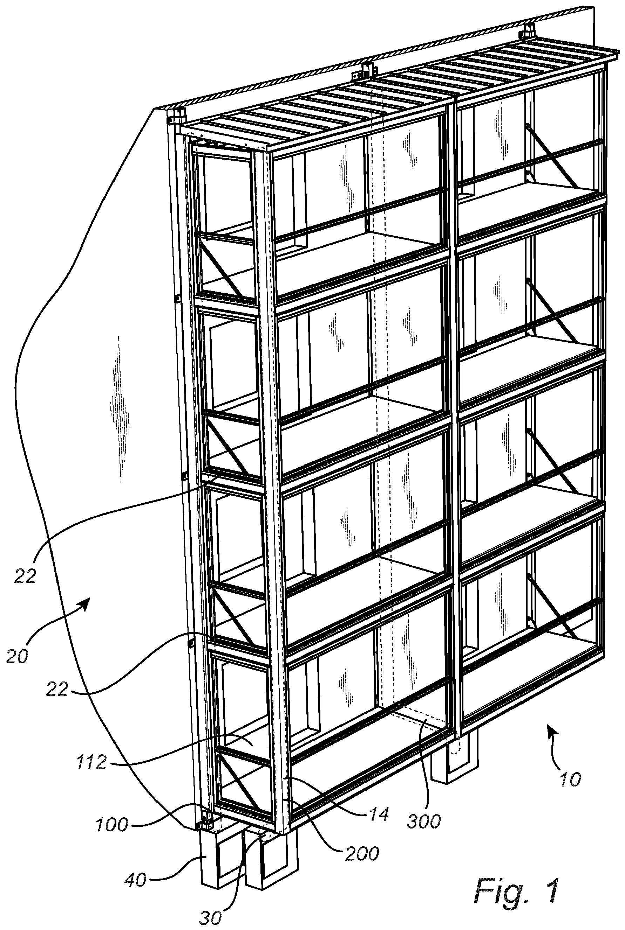

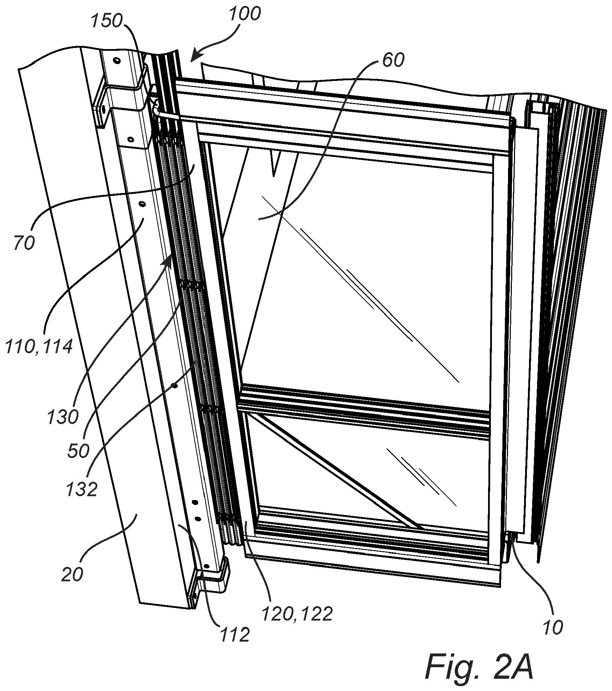

A realisation made by the inventors is that a balcony arrangement 10 may be used to hide or integrate the fluid pipes 30 of a heat pump system. A heat pump system typically comprises, see Fig. 1, a central, common, outdoor heat exchanger 40 and a plurality of local indoor heat exchanger units (not shown) connected to each other by a plurality of fluid pipes 30. The basic idea of the invention is a system 100, 200, 300 for a balcony arrangement 10 on a building 20. The system 100, 200, 300 comprises, as will be described below with reference to Figs. 2A-2D, Fig. 3 and 4A-4B a first wall structure 110, 210, 310 and a second wall structure 120, 220, 320. At least one of the first and second wall structures forms part of the balcony arrangement 10. The system 100, 200, 300 further comprises at least one pipe channel 130, 230, 330 configured to guide a plurality of fluid pipes 30 from at least one central outdoor heat exchanger 40 to a plurality of local indoor heat exchanger units that are arranged inside a room of the building. The at least one pipe channel 130, 230, 330 is configured to extend along a longitudinal interface between the first wall structure 110, 210, 310 and the second wall structure 120, 220, 320. The fluid pipes 30 are used for transporting a refrigerant of the heat pump. The pipe channel 130, 230, 330 may be used for other types of pipes as well as cables, thereby serving as an installation channel with a multipurpose use. As non-limiting examples, the pipe channel may be used for electricity cables, network cables and/or broadband cables.

The system 100, 200, 300 is generally suitable for a building 20 with a balcony arrangement 10 that extends over more than one floor level 22 with balconies 12 at each floor level. In other words, the balcony arrangement 10 should be seen as a plurality of balconies arranged in columns and/or rows. The building 20 may be an apartment building as in Fig. 1, but the system 100, 200, 300 is also suitable for other types of buildings. As an example, it may be an apartment building with several floors with balconies 12 at every floor. In such case, the pipe channel 130 or pipe duct 132 may extend from the bottom where the central, common, outdoor heat exchanger 40 is located and up to the top floor, thereby supplying a local indoor heat exchanger unit at each floor level. It also allows for supplying more than one local indoor heat exchanger unit 40 at the same floor. By providing two or more local indoor heat exchanger units 40 at different floor levels or in different rooms at the same floor level, a more efficient installation of the fluid pipes 30 may be provided for. Furthermore, a more efficient use of resources may be achieved when fewer central outdoor heat exchangers 40 are used.

In Fig. 1 three different positions of the system 100, 200, 300 are shown. The system may be positioned in other positions as well. Also, a system may be arranged to extend between different positions depending on the overall design of a specific building and its balcony installation/layout and also on the position of the central outdoor heat exchanger 40. Generally, only one of the systems 100, 200, 300 are used for one building 20. However, in some embodiments combinations of the systems may be used. The central outdoor heat exchanger 40 is illustrated at the ground level. However, it should be noted that the central outdoor heat exchanger may be located in other positions with remained function, such as at the roof of the building.

In Fig. 1 a first system 100 is located against or adjacent to an exterior wall 112 of the building. The first system 100 will be further discussed in connection to Fig. 2A-2D. A fourth embodiment of a system that also is located adjacent to the exterior wall 112 will be discussed in connection to said figures.

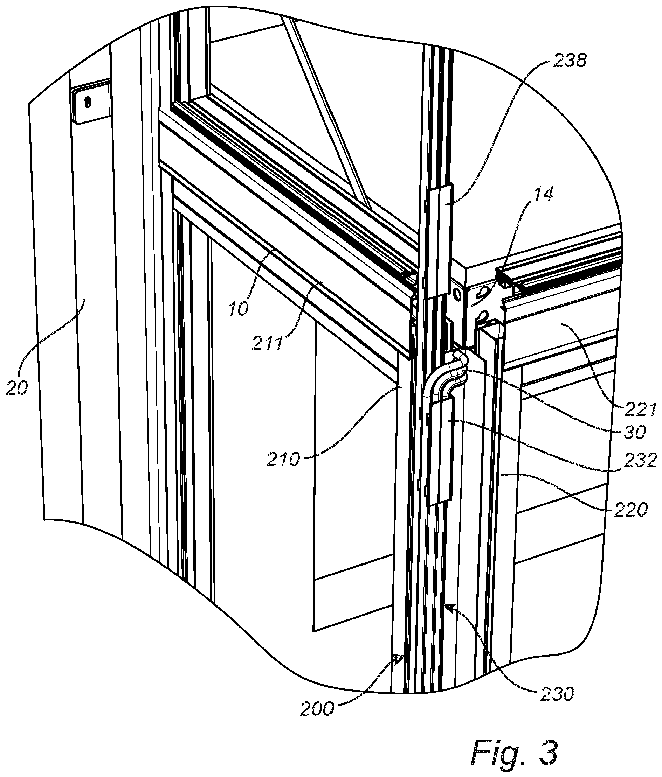

A second embodiment of the system 200 is arranged at a second position. The system 200 is arranged in the corner 14 of the balcony arrangement 10. The second system 200 may form the corner 14 of the balcony arrangement 10 or be integrated in the corner 14. The second embodiment 200 will be further discussed in connection to Fig. 3.

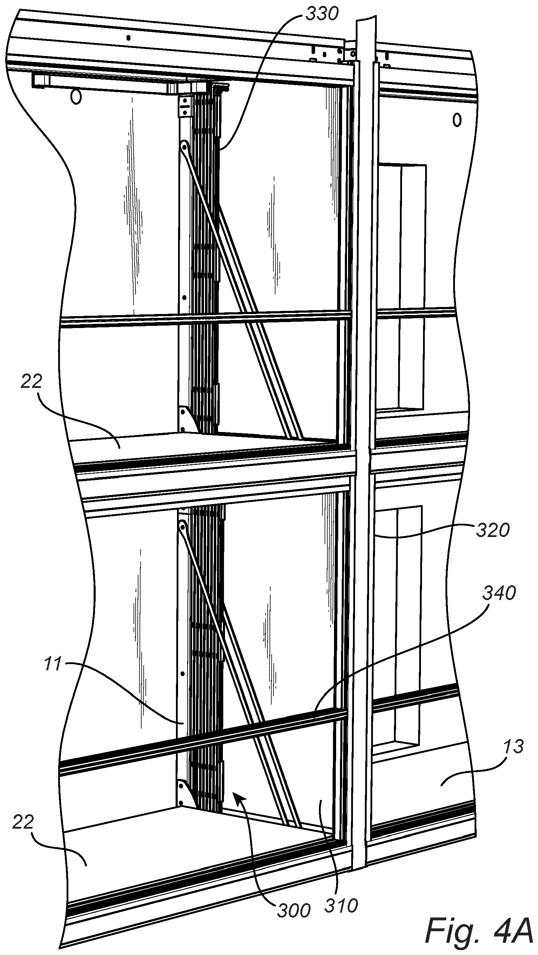

A third embodiment of the system 300, located in a third position, between two balcony sections of the balcony arrangement is also illustrated. The third embodiment of the system 300 will be further discussed in connection to Figs. 4A-B.

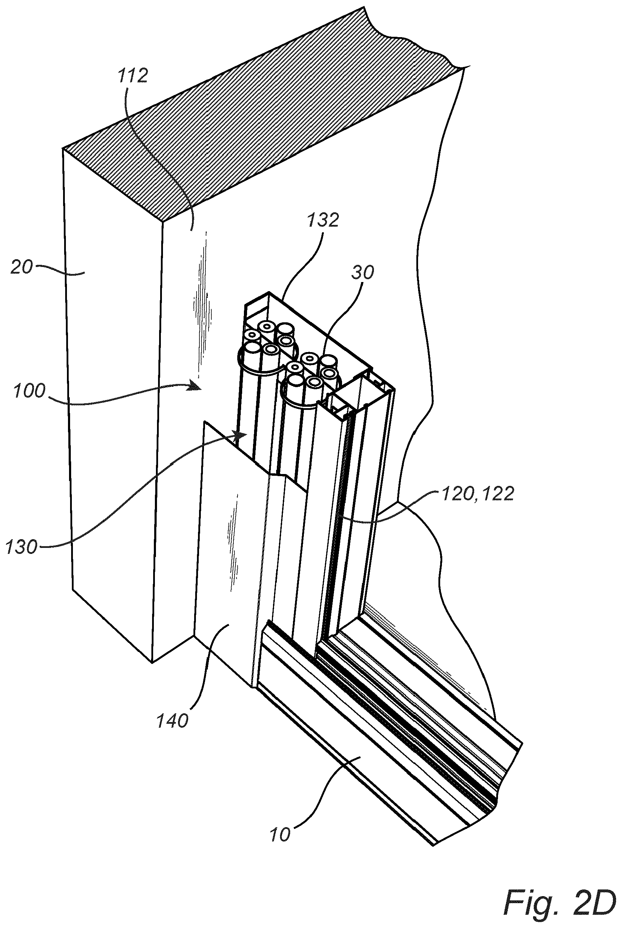

Some advantages with integrating the pipe channel 130, 230, 330 in the balcony arrangement 10 are that the aesthetics of the building 20 may be enhanced since the fluid pipes 30 are challenging to spot, and also that the installation of the fluid pipes 30 are facilitated. Furthermore, the integrated fluid pipes 30 are not mounted directly in the exterior wall 112. Thus, there will not be any damage made to the exterior wall 112 of the building 10. The exterior wall 112 will thereby be kept intact and thereby the weatherproof outer layer will function as intended. Also, the energy efficiency of the building may be less affected since less holes are made. Further, since the pipe channel may be formed by a pipe duct, there will be no impact to the design of the individual balcony modules as such. Turning to Fig. 2A, the first embodiment of the system 100 is disclosed. In this embodiment the first wall structure 110 is a wall pillar 114 configured to be mounted to the exterior wall 112 of the building. However, the first wall structure 110 may be the exterior wall 112 in some embodiments, see Fig. 2D. The first structure 110 is configured to allow a direct or indirect suspension of the balcony arrangement 10. The second structure 120 is a side pillar 122 of the balcony arrangement 10. Further, the exemplified first system is, as a non-limiting example, provided with four pipe channels 130, each pipe channel being formed by a pipe duct 132. The skilled person realises that the number of pipe channels 130 and hence pipe ducts may differ from one installation to another. The pipe ducts 132 are configured to extend along a longitudinal interface between the wall pillar 114 and the side pillar 122. The wall pillar 114 and the side pillar 122 may be seen as structural members extending between two or more floors even if each pillar comprises a plurality of pillars which are connected to each other directly or through some type of connection. This is best seen in Fig. 1. The position of the pipe ducts 132 between the wall pillar 114 and the side pillar 122 allows the pipe ducts 132 to be located close to the exterior wall 112 of the building. As the pipes will be connected to one or more local indoor heat exchanger units (not illustrated), which are arranged inside the building, it may facilitate the installation if the heat exchanger units. Hence, the pipe ducts 132 can be suspended close to where the prior art fluid pipes 30 would be located. The prior art fluid pipes 30 would typically be suspended directly in the exterior wall 112 of the building. By the invention, this may now be performed without providing any extra holes in the exterior wall 112 of the building.

As can be seen in Fig. 2A, the side pillar 122 forms part of a glazed balcony arrangement. Where a glazed area 60 of the balcony arrangement 10 starts in view of the exterior wall 112 of the building can be decided by the number of pipe ducts 130 that are installed. Hence, the pipe duct(s) 130, which as such is to be considered as a structural member, is configured to be received in a gap between the exterior wall 112 of the building and the side pillar 122 of the glazed balcony arrangement. As said, this embodiment illustrates four pipe ducts 130 but other embodiments may have more or fewer pipe ducts 130. The four pipe ducts 130 are exemplified as being arranged side by side in a linear pattern 1x4 along a line extending orthogonally to the exterior wall 112 of the building. The skilled person realises that other patterns may be used. Two or more pipe ducts may be arranged in a linear pattern along a line in parallel with the exterior wall of the building, or in a group of e.g. 2x2 with two lines with two pipe ducts each.

The pipe ducts 130 extend in parallel to each other when they extend from the central, common outdoor heat exchanger 40 to a respective local indoor heat exchanger unit. This means that the pipe ducts 130 may provide a direct channel between the central outdoor heat exchanger 40 and its local indoor heat exchanger unit. Each channel may in other words, in some embodiments, be connected to only one local indoor heat exchanger unit. However, in some embodiments one pipe duct 130 may connect to more than one local indoor heat exchanger unit.

The pipe ducts 130 are modular both as they can be connected to each other, one after the other for a longer extension or next to each other in a parallel fashion to provide as many pipe ducts 130 as desired, thereby providing a plurality of pipe duct sections 134. With modular pipe duct sections 134, the pipe channel 130 is much easier to adapt to the balcony arrangement 10. Furthermore, it may facilitate the transportation of the pipe duct sections 134. In some embodiments, at least one of the wall pillar 114 and the side pillar 122 may be a modular section, thereby allowing a plurality of wall pillar 114 sections and side pillar 122 sections respectively to be interconnected one after the other into a total length required to meet the height of the building 20 and hence the number of floor levels 22 of the building 20.

The respective pipe duct 130 may comprise two opposite exterior side walls, each having a flat surface extension. The flat surface extension allows a facilitated fastening of the pipe duct between the first wall structure 110 and the second wall structure 120, but also when arranging two or more pipe ducts 132side by side in an abutting relation.

To facilitate the installation process, the pipe ducts 132 may comprise a plurality of fasteners 50 that are configured to secure the plurality of fluid pipes 30 to the pipe duct 132. The fasteners 50 may be formed or arranged in the pipe duct as snap-fit fasteners that allow the fluid pipes 30 to be snapped into the fasteners 50. Alternatively, different types of clamps may be used. In other embodiments the pipe duct may have a profile that allows the fasteners 50 to be connected in the profile.

The side pillar comprises a drainage system 150 to which it is connected a drainage pipe 70, from the local indoor heat exchanger unit, through the pipe channel 130. The drainage system 150 allows for drainage of the condensation water from the local indoor heat exchanger unit. The drainage pipe 70 follows the pipe channel 130 until it reaches the side pillar 122 where it is connected to the drainage system 150. The drainage system 150 allows the condensation water to flow out in the already prepared system of the balcony arrangement 10.

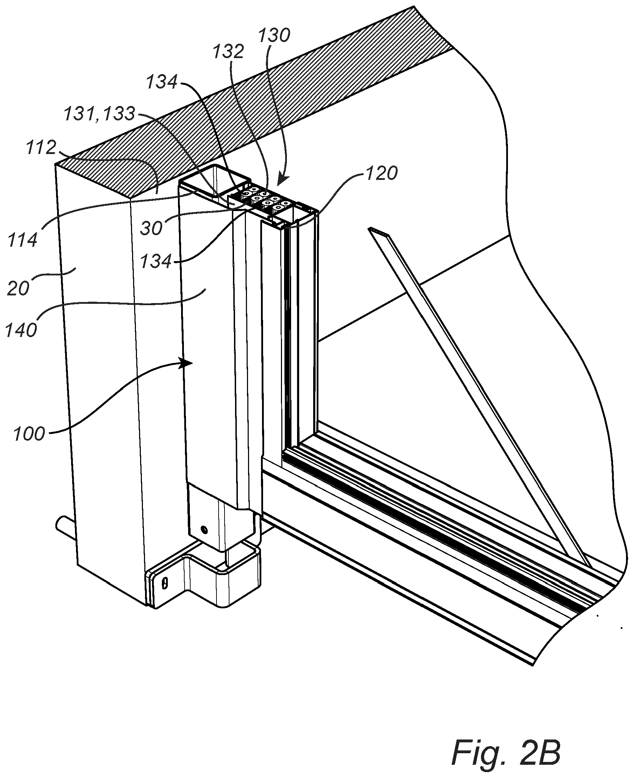

Turning to Fig. 2B, a closer view of the first system 100 is illustrated. The system comprises the wall pillar 114 mounted to the exterior wall 112 of the building 20, the side pillar 122 of the balcony arrangement 10 and the pipe channel 130. A plurality of pipe duct sections 134 extends in parallel with each other, thereby forming a plurality of pipe ducts 132 in the pipe channel 130. The pipe ducts 132 have an extruded profile having a closed cross-sectional profile defining one common channel for all pipe duct 132. However, in some embodiments each pipe duct 132 may form at least two separate channels in which the fluid pipes 30 may be located. In installations where more types of pipes and cables are installed in the pipe duct 132, it may be preferred with separate channels. The extruded profile may have an inspection side 131 that may be opened. This may be advantageous during maintenance and inspection of the fluid pipes 30. The inspection side 131 may be provided with an openable wall portion 133.

A cover plate 140 is arranged along an exterior surface formed by the wall pillar 114, the side pillar 122 and the pipe 130 channel. The cover plate 140 provides a smooth surface that can be adapted to fit well with the rest of the balcony arrangement 10. The cover plate 140 covers the fluid pipes 30, thereby further enhance the aesthetics of the building 20. There may be one cover plate 140 at each side of the balcony arrangement 10 such that the system 100 is covered both from a view from the inside of the balcony as well as from a view outside the balcony.

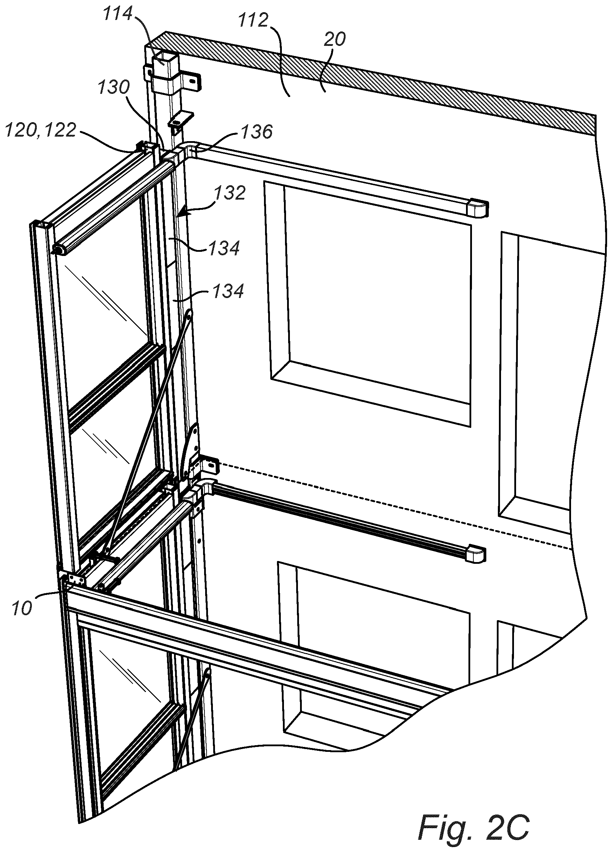

Turning to Fig. 2C the connection between the pipe duct 132 and the exterior wall 112 of the building and where the pipe duct 132 connects to the local indoor heat exchanger is illustrated. The indoor heat exchanger is not shown. The pipe duct 132 has a branch pipe duct 136 that is arranged between the consecutive pipe duct sections 134. The branch pipe duct 136 branches off from the pipe channel 130 such that it leaves the longitudinal interface between the wall pillar 114 and the side pillar 122. The pipe duct 132 is continuous along the exterior wall 112. The non-illustrated local indoor heat exchanger unit is configured to be located at the room inside of the balcony. In other embodiments the pipe duct branch 136 may branch off along the exterior wall 112 in the other direction, away from the balcony. In for example embodiments where each pipe duct 132 may provide more than one local indoor heat exchanger unit with fluid pipes 30, it may be advantageous to have a branch pipe duct 136 to allow branching of the pipe duct 132. In embodiments where each pipe duct 132 only supply one local indoor heat exchanger unit no pipe duct branch may be needed.

Turning to Fig. 2D, a second embodiment, positioned in the first position, of the first system 100 is illustrated. In the second embodiment the pipe channel 130 is located between the exterior wall 112 of the building 20 and the side pillar 122 of the balcony arrangement 10. There are four pipe ducts 132 located in the pipe channel 130. The four pipe ducts 132 have an extruded profile having an open cross-sectional profile. The extruded profile may be any one of the following group of profiles, a U-profile, C-profile, E-profile, H-profile, Z-profile, T-profile, and L-profile. These are all examples of what, in the context of the application, should be understood as open cross-sectional profiles. The open cross-sectional profile may have a cover plate 140 that encapsulates the fluid pipes 30.

The extruded profile may be designed such that the pipe duct 132 is provided with a fastening surface to which the fluid pipe(s) 30 may be fastened with cable ties or other suitable means.

Now turning to Fig. 3 where a third embodiment positioned in the second position from Fig. 1 is illustrated. In the third embodiment, the first wall structure 210 and the second wall structure 220 form part of the balcony arrangement 10. The at least one pipe channel 230 is formed by a pipe duct 232 configured to extend along a longitudinal interface between the first wall structure 210 and the second wall structure 220. The pipe duct 232 forms a corner 14 of the balcony arrangement 10 between the first wall structure 210 and the second wall structure 220. In other words, the position of the pipe duct 232 is in a corner between one of the side walls 211 of the balcony arrangement 10 and a front wall 221 of the balcony arrangement 10. It may be advantageous with a corner position as it may not affect the glazed area of a glazed balcony arrangement 10.

Turning to Fig. 4A, a fourth embodiment of the system 300 positioned in the third position is illustrated. In the fourth embodiment, the first wall structure 310 and the second wall structure 320 is configured to form a common fire wall between a first balcony section 11 and a second balcony section 13. The system 300 also comprises a third wall structure 340 that is the front wall of the balcony arrangement 10. The location between a common firewall of the first 11 and second balcony section 13 results in a shorter installation distance to both of the balconies. It may also be reached from both of the balconies. The balcony sections are common in apartment buildings where two or more apartments are adjacent to each other. To separate the balconies, walls are installed between. The walls may both be used as a fire wall and/or for privacy. The walls may extend over two or more floors to separate rows of balconies at different floors.

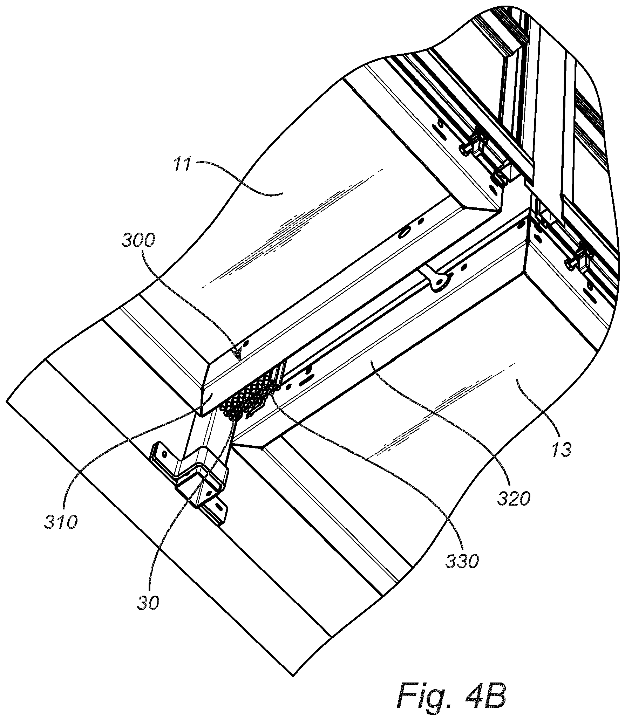

Turning to Fig. 4B, the fourth embodiment is illustrated where the pipe duct passes between two floor levels. The pipe channel 330 passes between the two balcony sections 11, 13 and between the first wall structure 310 and the second wall structure 320.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims.

## Claims

1. A system (100,) for a balcony arrangement (10) on a building (20), wherein the balcony arrangement comprises a plurality of balconies (12), the system comprising,
a first wall structure (110, 210, 310),
a second wall structure (120, 220, 320), at least one of the first and second wall structures being part of a balcony arrangement (10), and
at least one pipe channel (130, 230, 330) configured to guide a plurality of fluid pipes (30) from one central outdoor heat exchanger (40) to a plurality of local indoor heat exchanger units to be arranged inside different rooms of the building (20),
wherein the at least one pipe channel (130, 230, 330) is configured to extend along a longitudinal interface formed between the first wall structure (110, 210, 310) and the second wall structure (120, 220, 320).

2. The system (100) according to claim 1, wherein at least one of the first wall structure (110, 210, 310) and the second wall structure (120, 220, 320) extends between two or more floor levels (22) of the building (20); and wherein the plurality of local indoor heat exchanger units (40) is arranged inside rooms at different floor levels of the building.

3. The system (100) according to claim 1 or 2, wherein the first wall structure (110) is an exterior wall (112) of the building (20), or a wall pillar (114) configured to be mounted to the exterior wall of the building and configured to allow a direct or indirect suspension of the balcony arrangement (10);
the second wall structure is a side pillar (122) of the balcony arrangement, and
the at least one pipe channel (130) is formed by a pipe duct (132) configured to extend along a longitudinal interface between the exterior wall (112) of the building and the side pillar (122) or between the wall pillar (114) and the side pillar (122).

4. The system (200) according to claim 1 or 2, wherein the first wall structure (210) and the second wall structure (220) are forming part of the balcony arrangement (10); and
wherein the at least one pipe channel (230) is formed by a pipe duct (232) configured to extend along a longitudinal interface between the first wall structure and the second wall structure.

5. The system (200) according to claim 4, wherein the pipe duct (232) is forming a corner (14) of the balcony arrangement (20) between the first wall structure (210) and the second wall structure (220).

6. The system (100, 200) according to any one of claims 3 to 5,
wherein the at least one pipe duct (132, 232) is two or more pipe ducts configured to be arranged at least partly parallel to each other between the central outdoor heat exchanger (40) and a respective local indoor heat exchanger unit.

7. The system (100, 200) according to claims 3 to 6, wherein the at least one pipe duct (132, 232) is modular and forms a plurality of pipe duct sections (134, 234).

8. The system (100, 200) according to anyone of claims 3 to 7, further comprising at least one branch pipe duct (136) configured to be arranged between two consecutive pipe duct sections (134) or at the end of one pipe duct section (138).

9. The system (100, 200) according to any one of claims 3 to 8 claims, wherein the at least one pipe duct (132) is an extruded profile having a closed cross-sectional profile defining one common channel or defining two or more separate channels.

10. The system (100, 200) according to any one of claims 3 to 8,
wherein the at least one pipe duct (132) is an extruded profile having an open cross-sectional profile.

11. The system (100, 200) according to any one of claim 3 to 10,
wherein the at least one pipe duct (132, 232) comprises two opposite exterior side walls (138), each having a flat surface extension.

12. The system (100, 200) according to any one of claims 3 to 11, further comprising at least one cover plate (140) configured to be arranged along an exterior surface formed by at least one of, and preferably of at least two of the first wall structure (110, 210), the second wall structure (120, 220) and the at least one pipe channel (130, 230).

13. The system (100, 200) according to any one of claims 3 to 12,
wherein the at least one pipe duct (130, 230) comprises a plurality of fasteners (50) configured to secure the plurality of fluid pipes (30) to the at least one pipe duct.

14. The system (300) according to claim 1 or 2, wherein the first wall structure (310) and the second wall structure (320) are configured to form a common wall between a first (11) and a second (13) balcony section; and
wherein the system (300) further comprises a third wall structure (340), said third wall structure being a front wall of the balcony arrangement (20).

15. The system (100, 200, 300) according to anyone of the preceding claims, wherein at least one of the first wall structure (110, 210, 310), the second wall structure (120, 220, 320) and, if present, the third wall structure, (340) is a glazed wall of the balcony arrangement (10).

16. The system (100, 200, 300) according to anyone of the preceding claims, wherein one of the first wall structure (110, 210, 310) and the second wall structure (120, 220, 320) further comprises a drainage system (150), and
wherein the pipe channel (130, 230, 330) is configured to guide a drainage pipe (70) from the local indoor heat exchanger unit to the drainage system (150).

17. Use of a system according to any one of the preceding claims on a building with at least one balcony arrangement (10).
